# EUROPEAN PATENT SPECIFICATION

(11) **EP 3 709 670 B1**
(45) Date of publication and mention of the grant of the patent: **01.03.2023**
(21) Application number: 20162155.4
(22) Date of filing: 10.03.2020
(51) Int. Cl.: H04Q 9/00

(54) **SYSTEM FOR MONITORING TRANSPORT INFRASTRUCTURE AND METHOD THEREOF**
SYSTEM ZUR ÜBERWACHUNG DER TRANSPORTINFRASTRUKTUR UND VERFAHREN DAFÜR
SYSTÈME DE SURVEILLANCE D'UNE INFRASTRUCTURE DE TRANSPORT ET PROCÉDÉ ASSOCIÉ

(30) Priority: 11.03.2019 IT 201900003443
(43) Date of publication of application: 16.09.2020
(73) Proprietor: Aliseatech S.r.l., 00133 Rome (IT)
(72) Inventor: PARISI, Alba Chiara, 00133 Rome (IT)
(74) Representative: Tiburzi, Andrea

(56) References cited:
- WO-A1-2016/179233
- WO-A1-2018/020472

## Description

The present invention relates to a system for monitoring transport infrastructures and method thereof.

### Field of the invention

More specifically, the invention relates to a system and method of the type mentioned, studied and realized in particular for carrying out continuous monitoring of transport infrastructures, such as for example roads, railways or the like, but which can be used for any infrastructure, of which is necessary to monitor the condition, allowing to determine the possible failures, and to determine the possible hazard.

In the following, the description will be addressed to the monitoring of transport infrastructures intended for the circulation of vehicles, but it is clear that the same should not be considered limited to this specific use.

### Prior art

In recent years, there has been a progressive development of devices and systems capable of monitoring the state of transport infrastructures.

In particular, technical solutions are currently spreading that allow to detect deformations or breakages of the road surface, such as road potholes and the like, by sending a stream of data (images, videos, etc.) by each user via mobile devices to a central processing unit.

However, such technical solutions have drawbacks.

A first drawback of such known solutions is the fact that they depend on the number of users who use the system. In fact, the accuracy and precision of these systems directly depends on the number of users who transmit the data collected via mobile devices.

Another drawback of these solutions is due to the need of simultaneously managing data streams from multiple mobile devices of respective users in order to guarantee the correct operation of the monitoring system.

A further drawback of these known solutions consists in the fact that they do not allow continuous monitoring of the state of infrastructures and civil works.

A technical problem with the above-mentioned solutions is that they are increasingly based on so-called "intelligent" computer learning systems, which are capable of detecting any road accidents, e.g. potholes, "recognizing" them from photographic images or captured videos.

Although such systems are becoming more and more reliable, it often happens that, for example, a pothole can be filled with sand, water or present superficially soft objects (an envelope, a paper or the like), which at worst do not allow the known systems to identify the pothole, at best, instead, do not allow an accurate assessment of the depth of the same.

This may imply an underestimation of the dangerousness of the road disasters detected, not allowing a prompt settlement of the most dangerous failures. Just to mention an example, it is known that even a small but deep road pothole can be very dangerous for a motorcyclist.

The relevant prior art comprises the patent application WO 2018/020472 A1 and the patent application WO 2016/179233 A1.

### Scope of the invention

In light of the above, it is therefore an object of the present invention overcoming the drawbacks mentioned in the proposed solutions of the prior art, providing a system for monitoring transport infrastructures capable of detecting, for example, any deformation or failures of the road surface, capable of determining with a better degree of certainty, the dangerousness.

Another object of the invention is that of providing a system for monitoring transport infrastructures, which allows acquiring in real time data on possible deformations or failures of the road surface.

A further object of the invention is to provide a system for monitoring transport infrastructures, which allows users to be warned of a possible danger for their safety.

Another object of the invention is to provide a system for monitoring transport infrastructure that is highly reliable, relatively simple to manufacture, and at competitive costs when compared to the prior art.

Still, object of the present invention is to provide the tools necessary for the execution of the method and the apparatuses to perform such method.

### Object of the invention

It is therefore specific object of the present invention to provide a system for monitoring a transport infrastructure according to claim 1.

Preferably according to the invention, said system is a Cartesian reference system xyz, wherein the linear speed data of said moving means are detected by said accelerometer with respect to the xy plane of said Cartesian reference system xyz, said xy plane being perpendicular to said axis, and wherein said angular velocity data of said moving means are detected by said gyroscope around the x, y, z axes of said Cartesian reference system xyz.

Still according to the invention, the determination of said failures of said transport infrastructure is detected by said remote detecting unit by comparing a recognition model of said failures defined by said operational data with a objects model recognition of the Open Source type as a TensorFlow model or the like.

Conveniently according to the invention, said system may be disabled when said linear speed of said moving means on said transport infrastructure is less than a further predetermined speed threshold.

Advantageously according to the invention, said operating data may comprise structure data relating to the geometric configuration of said transport infrastructure, wherein said data acquisition means comprise at least one video camera for acquiring said structure data in real time, and/or said structure data relating to the geometric configuration of said transport infrastructure may be processed or post-processed by said processing unit of said central control unit through object recognition algorithms, which use a HOG descriptor, a SIFT descriptor, or the like.

Still according to the invention, said operating data may comprise geolocation data relating to at least one geographical position of said handling means, and wherein said data acquisition means may comprise geolocation means configured to acquire said geolocation data, and/or said operating data may comprise environmental data relating to respective atmospheric conditions with respect to said at least one geographical position of said moving means, and wherein said data acquisition means comprise a plurality of sensors to acquire said environmental data.

Always according to the invention, said remote detecting unit may comprise storage means for storing said operating data.

It is also object of the present invention to provide a method for monitoring a transport infrastructure according to independent claim 8.

Advantageously according to the invention, said method may comprise, after said verification step, in case of a positive result, the step of comparing said recognition model with a objects recognition model of Open Source type, such as a TensorFlow model or the like, and acquiring, by means of said geolocation means, said geolocation data relating to at least one geographical position of said moving means, and said transmission step further may provide for a transmission to said central control unit of said geolocation data, and of the result of said comparison.

Always according to the invention, said central control unit, in the processing step, generates a further model for recognizing said failures of said transport infrastructure starting from said data received.

Conveniently according to the invention, said method may comprise a further transmission step, wherein said central control unit transmits vehicle data to said storage means, concerning the type of said moving means, and acquisition data, relating to the type of said acquisition means.

Always according to the invention, said method may comprise the step of acquiring, by means of said camera of said data acquisition means of said detection units remote, said structure data relating to the geometric configuration of said transport infrastructure.

Still according to the invention, said method may comprise the step of acquiring, by means of said plurality of sensors of said data acquisition means of said remote detecting unit, said environmental data, relative to respective atmospheric conditions with respect to said at least one geographical position of said moving means.

### Brief description of the drawings

The present invention will be now described, for illustrative but not limitative purposes, according to its preferred embodiments, with particular reference to the figures of the enclosed drawings, wherein:
figure 1 is a block diagram illustrating an embodiment of the system for monitoring transport infrastructures, according to the present invention;
figure 2 shows an application to a bus of the system for monitoring transport infrastructures according to figure 1;
figure 3 shows a top view of figure 2;
figure 4 is a block diagram of an embodiment of data acquisition means of a remote detection unit of the infrastructure monitoring system according to figure 1; and
figure 5 is a flowchart showing an embodiment of the method for monitoring infrastructure, according to the present invention.

### Detailed description

In the various figures, similar parts will be indicated by the same reference numbers.

With reference to the aforementioned figures, it is noted that the system for monitoring a transport infrastructure, indicated as a whole with the reference number 1, comprises a remote detecting unit 11, associated with a respective moving means 10, and a central unit control 13, connected to said remote detecting unit 11 by means of a telematics communication network 12.

Said remote detecting unit 11 is configured to acquire, store and transmit to the central control unit 13 morphological data associated with said transport infrastructure I and data relating to said moving means 10.

As said, the remote detecting unit 11 is installed on said moving means 10, which is mobile on said transport infrastructure I. By way of example, said remote detecting unit 11 can be positioned on a vehicle, a motor vehicle, etc..

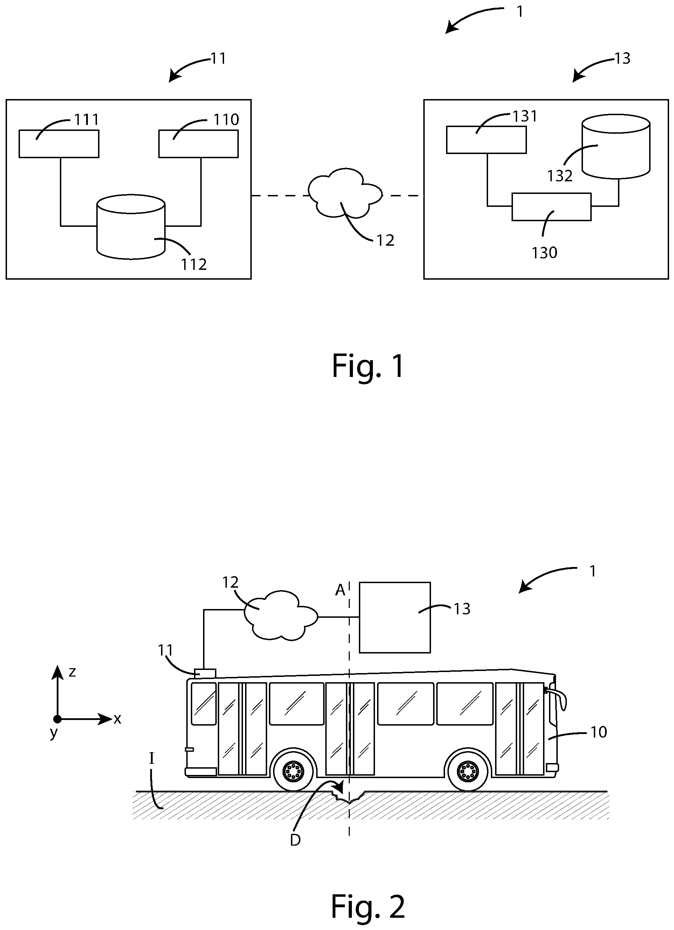

With particular reference to figure 1, in an embodiment of the system 1 according to the present invention, said remote detecting unit 11 comprises: data acquisition means 111, transceiver means 110, and storage means 112, the latter connected both to said data acquisition means 111, and to said transceiver means 110.

In the embodiment at issue, said data acquisition means 111 are configured to acquire operating data.

Said operating data comprise:
- "structural data" relating to the geometric configuration of said transport infrastructure I;
- "acceleration data", concerning acceleration or deceleration values of said moving means 10;
- "linear speed data", concerning linear speed values, or the speed of said moving means 10;
- "angular velocity data", concerning angular velocity values of said moving means 10;
- "geolocation data" relating to at least one geographical position of said vehicle 10; and
- "environmental data" referring to atmospheric conditions with respect to said at least one geographical position of said moving means 10.

The set of said operating data defines a recognition model of at least one failure D of said transport infrastructure I, such as, for example, a deformation of the road surface.

This recognition model, as will be better explained below, together with appropriate predefined reference thresholds, allows identifying, in real time, at least one failure D of the transport infrastructure I, on which the moving means 10 moves.

Furthermore, in the embodiment that is described, said recognition model is an adaptive model, that is, it is capable of updating its data in case of changes in the surrounding environment, for example associated with the transport infrastructure I, compared to previously acquired data.

In particular, said data acquisition means 111 are configured to acquire said data through two operating modes:
- a continuous mode, in which the data acquisition takes place without interruptions, from a first temporal instant to a second temporal instant (for example, from the switching on time to the switching off time of said acquisition means 111); and
- an activation or trigger mode, in which the data acquisition is activated by an event (or "trigger" event), which activates the activation of a specific device or sensor.

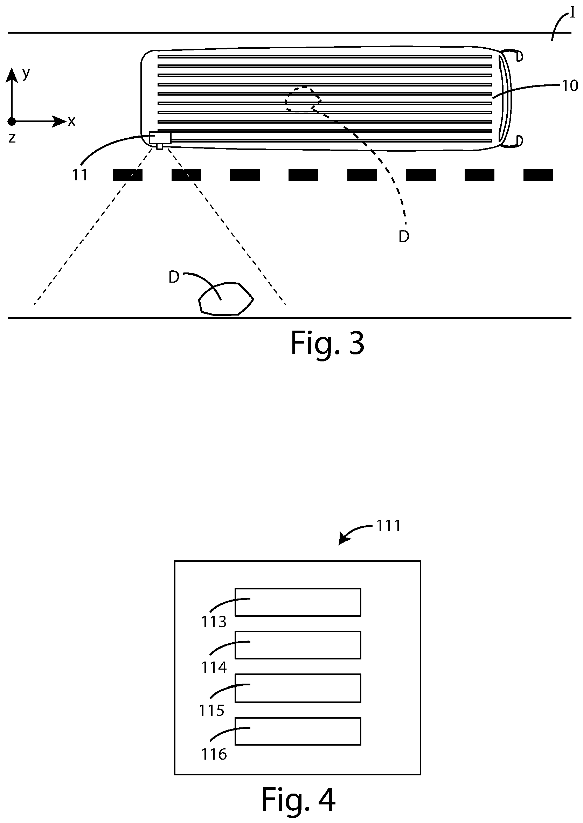

More in detail, said data acquisition means 111, such as for example a single-board computer of Rasberry Pi type, as can be seen from figure 4, comprise: a video camera 113, an accelerometer 114, geolocation means 115, a plurality of sensors 116, and a gyroscope 117.

Said video camera 113 is configured to acquire, in real time, said structure data, such as, for example, images, video and/or audio sequences, or video and/or audio data of said transport infrastructure I.

In an embodiment of the present invention, the images and the video and/or audio sequences acquired by said video camera 113 during the movement of said moving means 10 are processed or post-processed by, for example, object recognition algorithms using a HOG ("Histogram of Oriented Gradients") descriptor, a "SIFT ("Scale Invariant Feature Transform") descriptor, and so on.

The use of such recognition algorithms typically involves a learning step, in which the collection of data, the selection of one or more features for the recognition, the selection of a classification model, etc. takes place, and a classification step, in which the object is identified on the basis of the data and information previously collected, possibly comparing it with reference objects.

Said accelerometer 114 is capable of acquiring said acceleration or deceleration data of said moving means 10, as well as said linear speed data of said moving means 10.

More in detail, said accelerometer 114 allows measuring the vibrations or the acceleration of said moving means 10 with respect to said transport infrastructure I. In the present embodiment said accelerometer 114 is of the three axial type, that is a device configured to detect the acceleration or deceleration values along the Cartesian axes x, y, and z, as shown in figure 2 and figure 3.

However, the possibility of using further types of accelerometers in the system 1 according to the present invention is not excluded.

Furthermore, as anticipated, said data acquisition means 111 are further configured to detect the speed of the movement, on said transport infrastructure I, of said moving means 10.

In fact, said accelerometer 114 allows to measure the linear speed of said moving means 10, with respect to said transport infrastructure I, with respect to a reference system, such as the xy plane of a Cartesian reference system xyz, as shown in figures 2 and 3.

In particular, as can be seen in figure 2, said xy plane is perpendicular to an axis A, in its turn parallel to the axis z and perpendicular to said transport infrastructure I.

Therefore, the data relating to the motion parameters of said moving means 10 comprise said acceleration or deceleration data, said linear speed data and said angular velocity data of said moving means 10.

The geolocation means 115 of said data acquisition means 111 are configured to acquire at least one geographical position of said moving means 10. In an embodiment of the system 1, such geolocation means 115 comprise a GPS module ("Global Positioning System").

In an embodiment of the system 1, said plurality of sensors 116 comprises a temperature sensor, for detecting at least one temperature value, a humidity sensor, for acquiring at least one humidity value, and a rain sensor, for detecting the presence of rainfalls.

In particular, the acquisition of these environmental data allows, among other things, the safe execution of maintenance interventions on said transport infrastructure I.

Said gyroscope 117 is capable of measuring the rotational motion of said moving means 10 with respect to a reference system.

In particular, said gyroscope 117 is capable of detecting even minimal variations of the angular velocity of said moving means 10.

In the present embodiment said gyroscope 117 is of the three axial type, i.e. a device configured to detect the angular velocity values with respect to a reference system around the Cartesian axes x, y, and z, as shown in figure 2 and figure 3.

However, the possibility of using further types of gyroscope in system 1 according to the present invention is not excluded.

The transceiver means 110 of the remote detecting unit 11 are configured to transmit data to said central control unit 13.

The storage means 112 of the remote detecting unit 11 comprise, for example, a database and are suitable for storing the data acquired by the data acquisition means 111. In fact, these storage means 112 are preferably connected to said data acquisition means 111. Furthermore, said storage means 112 are connected to said transceiver means 110.

In addition, said acquisition means 111 are further configured to receive from said central control unit 13 a plurality of predefined reference thresholds indicated with the numerical references A1, A2, and A3, vehicle data, concerning the type of said moving means 10, acquisition data, relating to the type of acquisition means 111, as well as the recognition model of at least one failure D of said transport infrastructure I.

In the embodiment described, said predefined reference thresholds A1, A2, and A3 are three. However, in further embodiments, said predefined reference thresholds can be different from three.

In more detail, the first reference threshold A1 is a vertical acceleration threshold, useful for determining the depth of the failure D, such as, for example, the depth of a pothole in the road surface.

The second reference threshold A2 is a linear speed threshold associated with the motion of the moving means 10 in the xy plane. Therefore, this threshold A2 allows to determine the exceeding of a predefined speed for said moving means 10, such as, for example, 50km/h.

The third reference threshold A3, on the other hand, is an angular velocity threshold around the Cartesian axes x, y, and z, useful for determining any rotations of said moving means 10 around at least one of said x, y, z axes.

Therefore, said remote detecting unit 11 is capable of verifying, substantially in real time, whether the acceleration, the linear speed and the angular velocity data acquired by said data acquisition means 111 exceeding or not the respective predefined reference thresholds.

As said, the central control unit 13, such as for example a processor or a computer, a plurality of computers connected to each other in a network, or any other processing device, is in communication with the remote detecting unit 11 via said telematics network communication 12, such as the Internet.

In particular, the central control unit 13 is configured to receive the vertical acceleration or deceleration data transmitted by said remote detecting unit 11 and to process said vertical acceleration or deceleration data to determine the presence of any failures D of said transport infrastructure I.

Said central control unit 13 is further configured to combine the structure data, the linear speed data, the angular velocity data, the geolocation data and the environmental data with said vertical acceleration or deceleration data, in order to confirm the presence of one or more possible failures D of said transport infrastructure I and to carry out subsequent maintenance operations.

Furthermore, said central control unit 13 is configured to update said geolocation data of said moving means 10, or to update the position of said moving means 10 with respect to a location map.

Advantageously, said central control unit 13 is then capable of communicating the presence of one or more possible failures D of said transport infrastructure I to external bodies such as, for example, bodies responsible for the road safety. With particular reference to figure 1, in an embodiment of the system 1, said central control unit 13 comprises: a processing unit 130, transceiver means 131, connected to said processing unit 130, and storage means 132, connected to said processing unit 130.

The processing unit 130 is the functional and main element of the central control unit 13 of the system 1 according to the present invention, and, for this reason, it is connected to, and in communication with the other elements of the central control unit 13 itself.

Conveniently, said processing unit 130 is equipped with calculating and processing means, configured to execute a computer program for the recognition of objects and for processing the data acquired by said remote detecting unit 11, as well as for performing the interface with the other elements of the central control unit 13. Furthermore, said processing unit 130 is also configured to control and coordinate the operation of the elements of the central control unit 13, which it is connected and in communication with.

Said processing unit 130 can be constituted, for example, by a computer or a plurality of computers, possibly cloud connected.

The transceiver means 131 of the central control unit 13 are configured to receive data from said remote detecting unit 11, while the storage means 132, such as for example a database, allow to store the data received by said central unit control 13.

In the embodiment of the present invention, said storage means 132 are included in said central control unit 13.

However, in other embodiments, said storage means 132 can be external to said central control unit 13 and operationally connected to the same.

In particular, said storage means 132 are capable of receiving from said central control unit 13 said vehicle data, said acquisition data, as well as said operational data, acquired by said remote detecting unit 11 in a training step, i.e. a training step of the same remote detecting unit 11.

In a system of the present invention, said storage means 132 comprise further data relating to respective objects such as, for example, road signs, plants, etc., which the system may possibly detect on said transport infrastructure I.

In addition, said storage means 132 are capable of storing at least one further recognition model of at least one failure D of said transport infrastructure I generated by said central control unit 13, said location maps, associated with the movements of said moving means 10, and a set of points and/or images on said location maps and associated with said moving means 10 (called, in jargon, "Knowledge Base").

Said storage means 132 are capable of transmitting to said central control unit 13 said at least one recognition model of at least one failure D of said transport infrastructure I.

Furthermore, said processing unit 130 is capable of updating, in real time, the data in said storage means 132 and associated with the respective moving means 10.

This allows, also through an operator's intervention, to constantly check and update the presence of any failures D of said transport infrastructure I, which said moving means 10 moves on, thus improving the road safety conditions for users.

The operation of the method 2 for monitoring the transport infrastructure I described above is as follows.

As mentioned above, as can be seen from figures 2 and 3, the moving means 10 is mobile on the transport infrastructure I, such as for example a road.

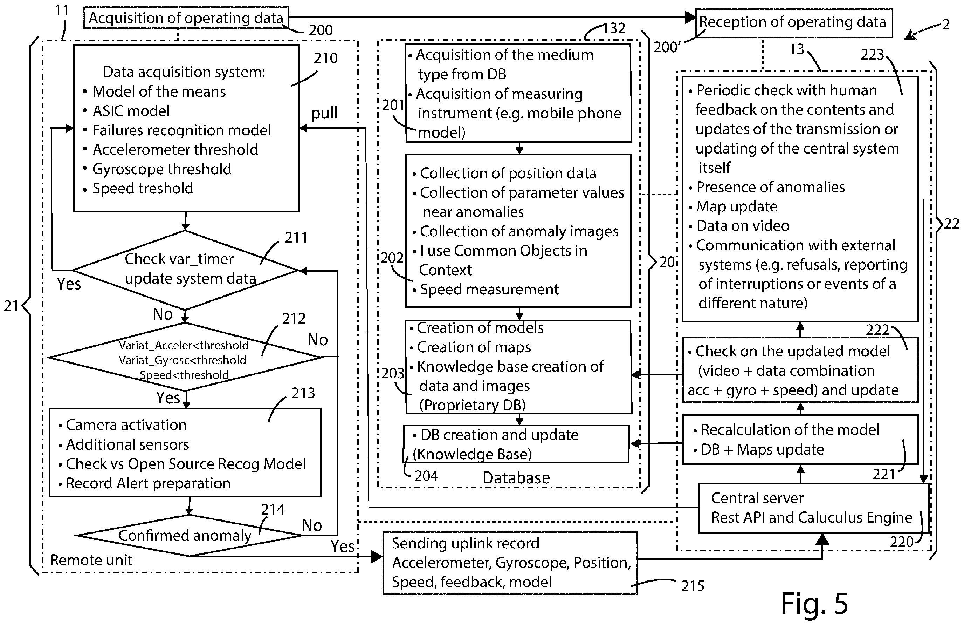

Initially, with reference to figure 5, in step 200, said remote detecting unit 11 acquires said operating data in continuous mode or trigger mode.

In more detail, said remote detecting unit 11 acquires, by means of said data acquisition means 111, the acceleration or deceleration data, in particular in the vertical direction of said moving means 10, by means of said accelerometer 114, the linear speed data of said moving means 10, by means of said accelerometer 114, and the angular velocity data of said moving means 10, by means of said gyroscope 117.

In particular, the remote detecting unit 11 acquires in continuous mode or in trigger mode, by means of said data acquisition means 111, the acceleration or deceleration data. More in detail, in the vertical direction of said moving means 10, by means of said accelerometer 114.

The accelerometer 114 is configured, among other things, to detect a vertical acceleration or deceleration with respect to the axis A, parallel to the axis z and perpendicular to said transport infrastructure I.

In other words, the accelerometer 114 allows sampling the acceleration data of the accelerometer 114, to obtain an acceleration function over the time along the vertical axis of the means 10, or of the detecting unit 11.

As can be seen from figures 2 and 3, a sudden change in the acceleration or deceleration of the moving means 10 along the z direction (or the direction of the A axis) implies the presence of a deformation of the road surface, such as for example a road pothole or a bump.

In fact, the moving means 10, movable along said transport infrastructure I, changes its vertical acceleration or deceleration typically in the presence of the failure D of said transport infrastructure I.

The acceleration or deceleration variations of the moving means 10 along the x and y directions can contribute providing data and information useful for determining any failures D and for establishing, consequently, the degree of danger of such failures D.

Furthermore, the remote detecting unit 11 acquires, through said data acquisition means 111, said structure data, or video and/or audio data, referred to the geometric or morphological configuration of said transport infrastructure I. By way of example, this acquisition can be carried out by means of one or more video cameras 113, possibly connected to each other.

In addition, the remote detecting unit 11 acquires said geolocation data and said environmental data by means of said geolocation means 115 and said plurality of sensors 116 respectively.

Subsequently, in step 200', said central control unit 13 receives, from said remote detecting unit 11, said operating data through said transceiver means 131.

Therefore, the training step of said remote detecting unit 11 comprises the steps 200 and 200' described above.

Furthermore, again with reference to figure 5, in step 20, said central control unit 13 is in communication with said storage means 132.

In more detail, in step 201, said central control unit 13 transmits said vehicle data to said storage means 132, concerning the type of said moving means 10, and said acquisition data, relating to the type of acquisition means 111, such as, for example, a model of video camera, smartphone, etc..

Subsequently, in step 202, said central control unit 13 transmits said operating acquired by said remote detecting unit 11 to said storage means 132 in a training step preceding the steps of the method according to the present invention.

In step 203, said storage means 132 store at least one recognition model of at least one failure D of said transport infrastructure I generated by said central control unit 13, said location maps, associated with the movements of said moving means 10, and a set of points and/or images, present on said location maps and associated with said moving means 10 (called, in jargon, "Knowledge Base").

In step 204, said storage means 132 update said set of points and/or images on the basis of said operating data received from said central control unit 13.

Subsequently, in step 21, said central control unit 13 is in communication with said remote detecting unit 11.

In particular, in step 210, said central control unit 13 is in communication with said remote detecting unit 11.

More in detail, said remote detecting unit 11 receives from said central control unit 13 said vehicle data, referred to said moving means 10, said acquisition data, relating to the type of acquisition means 111, said recognition model of at least one failure D of said transport infrastructure I, and said predetermined reference thresholds A1, A2, and A3.

As said, the first reference threshold A1 is a vertical acceleration threshold, the second reference threshold A2 is a linear speed threshold, associated with the motion of the moving means 10 in the xy plane, and the third reference threshold A3 of is an angular velocity threshold.

In step 211, said remote detecting unit 11 checks whether a predetermined period of time has elapsed (defined by the parameter "var_timer") for updating the data previously received by said central control unit 13.

If said predetermined time period has elapsed, the remote detecting unit 11 repeats step 210.

If, on the other hand, said predetermined period of time has not elapsed, the remote detecting unit 11 executes step 212, i.e. verifies whether said acceleration or deceleration data, said angular velocity data, and said linear speed data of said moving means 10 exceed or not said respective predefined reference thresholds A1, A2, and A3.

More in detail, said remote detecting unit 11 checks, substantially in real time, whether the vertical acceleration or deceleration variation of the respective moving means 10, movable along said transport infrastructure I, exceeds said respective first reference threshold A1, corresponding to a reference vertical acceleration value.

Furthermore, said remote detecting unit 11 checks, in real time, whether the change of the linear speed of the respective moving means 10 exceeds said respective second reference threshold A2, corresponding to a reference linear speed value.

Finally, said remote detecting unit 11 checks, in real time, whether the angular velocity value of the respective moving means 10 exceeds said respective third reference threshold A3, corresponding to a reference angular velocity value.

If the variations of the vertical acceleration or deceleration, the variations of the angular velocity and the linear speed value of said moving means 10 do not exceed said respective reference thresholds A1, A2 and A3, said remote detecting unit 11 repeats step 211.

If, on the other hand, the variations of vertical acceleration or deceleration, the variations of angular velocity, and the linear speed value of said moving means 10 exceed said respective reference thresholds A1, A2, and A3, said remote detecting unit 11 executes the step 213, or activates said video camera 113, said geolocation means 115, and said plurality of sensors 116, to confirm the presence or absence of said failure D of said transport infrastructure I.

Furthermore, said remote detecting unit 11 applies recognition techniques of a further recognition model of the prior art, such as, for example, an objects recognition model of Open Source type (TensorFlow or similar) to said recognition model.

Therefore, said video and/or audio data and said environmental data allow to confirm or not, though, for example, the comparison between the object recognition algorithm used and a further open source recognition algorithm of the prior art, the presence of said failure D of said transport infrastructure I.

In step 214, said remote detecting unit 11 confirms the presence of said failure D of said transport infrastructure I, determining the outcome of the comparison between said recognition model and said further recognition model of the prior art. By way of example, this outcome or feedback can also be defined in percentage terms.

If this failure D is not confirmed, or if such outcome is negative, said remote detecting unit 11 repeats step 211, while, if said failure D is confirmed, or such outcome is positive, said remote detecting unit 11 continues with step 215.

In step 215, said remote detecting unit 11 transmits to said central control unit 13 said acceleration or deceleration data, said angular velocity data, said geolocation data, said linear speed data, said outcome or comparison of said comparison recognition model, and said further recognition model of the prior art, together with the other structural, and environmental data.

By way of example, the transmission of data between said remote detecting unit 11 and said central control unit 13 can take place in real time or periodically at predetermined time intervals.

Finally, in step 22, said central control unit 13 processes the data received by said remote detecting unit 11.

In step 220, the central control unit 13 receives, through said transceiver means 131, said acceleration or vertical deceleration data of said moving means 10, together with the other structure, angular velocity, linear velocity, geolocation and environmental data.

Subsequently, in step 221, said central control unit 13 generates, by means of said processing unit 130, a further recognition model, updates the content of said storage means 132, and updates the position of said moving means 10 with respect to said location map.

In fact, said central control unit 13 processes said vertical acceleration or deceleration data together with the other structure data, angular velocity, linear velocity detected by said data acquisition means 111 and received by said transceiver means 131, to determine any failures D of said transport infrastructure I.

More in detail said central control unit 13 re-processes a further recognition model on the basis of said operating data transmitted by said remote detecting unit 11.

In one embodiment, this regeneration is stimulated by the application of two cascade models, i.e. of a step model and of the prior art for the image recognition.

In one embodiment, the presence of two predetermined thresholds T1 and T2 are assumed to correspond respectively to two reference vertical acceleration values.

In particular, the first threshold T1 corresponds to a failure D of the transport infrastructure I (or first failure D') which is not particularly serious for the safety of the users, such as for example a small road pit compared to a motorcycle tire, and shallow.

The second threshold T2, on the other hand, corresponds to a further failure D of the transport infrastructure I (or second failure D") more serious than the first failure D', such as, for example, a deep and disconnected road pit, therefore dangerous for the users' safety.

If the vertical acceleration or deceleration value of said moving means 10 is lower than said first threshold T1, the system 1 considers the acceleration variation of said moving means 10 in the vertical direction with respect to the axis A as a minimum or standard variation due to normal stresses and/or typical oscillations of the moving means 10 with respect to the transport infrastructure I.

If, on the other hand, the vertical acceleration or deceleration value of said moving means 10 lies between said first threshold T1 and said second threshold T2, the system 1 associates said first failure D' with said vertical acceleration or deceleration value, and therefore a first level of danger of this deformation of the transport infrastructure I.

Finally, if the vertical acceleration or deceleration value of said moving means 10 is higher than said second threshold T2, the system 1 associates said second failure D' with said vertical acceleration or deceleration value, and therefore a second level of danger of this deformation of the transport infrastructure I.

Preferably, said thresholds T1 and T2 are function of the speed of the moving means 10.

For example, below a minimum speed, no detection occurs. In this case, if the moving means 10 is moving below said minimum speed threshold, the monitoring system 1 is not active.

The above allows the system 1 to detect the presence of a failure D, determine the danger of this failure D, and monitor its status over time, or during subsequent acquisitions of said operational data by said remote detecting unit 11.

Furthermore, after determining the presence of a failure D of said transport infrastructure I referred to a respective level of danger, the processing unit 130 of said central control unit 13 is capable of combining the structure and geolocation data received by said remote detecting unit 11 with the vertical acceleration or deceleration value detected by said accelerometer 114, respectively in order to confirm and geolocate said failure D.

In fact, the images or video sequences acquired by said video camera 113 and the geographical position of the moving means 10 detected in the same time instant as the acquisition of the vertical acceleration or deceleration data, can be used, for example, to confirm the presence of any failure D on said transport infrastructure I.

Subsequently, in step 222, said central control unit 13 performs a comparison between said recognition model and said further updated recognition model, in order to verify whether or not to confirm the presence of said failure D previously encountered by said remote detecting unit 11.

Finally, in step 223, said central control unit 13 carries out a periodic check, by means of an operator, of said further recognition model, of the operating data transmission mode, and of the updating of said data. In particular, the intervention of the operator allows to improve the accuracy of the system 1, reducing the presence of errors caused, for example, by an incorrect selection of the reference thresholds.

Furthermore, said central control unit 13 transmits the presence of one or more possible failures D of said transport infrastructure I detected by the system 1, for example, to bodies responsible for road safety.

### Advantages

An advantage of the system for monitoring transport infrastructures according to the present invention is that it allows to obtain a high degree of scalability. In fact, the elements that make up this system can be modified and updated according to user needs and to different operating conditions.

Another advantage of the present invention is that of acquiring data in real time on possible deformations or failures of the road surface.

A further advantage of the present invention is that of determining the degree of danger of a failure of said transport infrastructure I.

Another advantage of the present invention is that of allowing fast and effective maintenance interventions.

It is also an advantage of the present invention allowing a continuous learning of the system following the reception of the data coming from the sensors previously arranged on transporting means or the like.

The solution according to the present invention also has the advantage of predicting potentially harmful events for users and therefore requiring, for example, precautionary maintenance of the infrastructures concerned.

## Claims

1. System (1) for monitoring a transport infrastructure (I), such as a road, railway tracks, on which moving means (10) can move, comprising:
a remote detecting unit (11), associated with said moving means (10), comprising
data acquisition means (111), for acquiring operational data, comprising one or more data related to the motion parameters of said moving means (10), and
transceiver means (110), connectable to a telematics communication network (12); and
a central control unit (13) comprising
a processing unit (130) and
transceiver means (131), connectable to said telematics communication network (12), and
storage means (132), for storing said data received by said central control unit (13), **characterized in that** the central control unit (13) is configured to generate at least one model for recognizing said failures (D) of said transport infrastructure (I).
wherein said central control unit (13) is configured to transmit, through said transceiver means (131) and through said telematics communication network (12), one or more predetermined reference thresholds of the motion of said moving means (10) to said remote detecting unit (11) and said recognition model,
wherein said remote detecting unit (11) is configured to check if said one or more data relating to motion parameters of said moving means (10) are greater than said respective one or more predetermined reference thresholds, so as to determine by said said central control unit (13) failures (D) of said transport infrastructure (I),
wherein said one or more data relating to motion parameters of said moving means (10) comprise vertical acceleration or deceleration data of said moving means (10) with respect to a vertical axis (A) perpendicular to said transport infrastructure (I), linear speed data of said moving means (10) with respect to a reference system, and angular velocity data of said moving means (10), with respect to said reference system,
wherein said data acquisition means (111) comprise an accelerometer (114), configured to detect said vertical acceleration or deceleration data, and said linear speed data, and a gyroscope (117), configured to detect said angular velocity data, and
wherein said one or more reference thresholds comprise a first vertical acceleration or deceleration reference threshold (A1), a second linear speed reference threshold (A2), and a third angular velocity reference threshold (A3).

2. System (1) according to the preceding claim, **characterized in that** said reference system is a Cartesian reference system xyz,
wherein the linear speed data of said moving means (10) are detected by said accelerometer (114) with respect to the xy plane of said Cartesian reference system xyz, said xy plane being perpendicular to said axis (A), and
wherein said angular velocity data of said moving means (10) are detected by said gyroscope (117) around the x, y, z axes of said Cartesian reference system xyz.

3. System (1) according to any one of the preceding claims, **characterized in that** the determination of said failures (D) of said transport infrastructure (I) is detected by said remote detecting unit (11) by comparing a recognition model of said failures (D) defined by said operational data with a objects model recognition of the Open Source type as a TensorFlow model.

4. System (1) according to any one of the preceding claims, **characterized in that** said system (1) is disabled when said linear speed of said moving means (10) on said transport infrastructure (I) is less than a further predetermined speed threshold.

5. System (1) according to any one of the preceding claims, **characterized**
**in that** said operating data comprise structure data relating to the geometric configuration of said transport infrastructure (I), wherein said data acquisition means (111) comprise at least one video camera (113) for acquiring said structure data in real time, and/or
**in that** said structure data relating to the geometric configuration of said transport infrastructure (I) are processed or post-processed by said processing unit (130) of said central control unit (13) through object recognition algorithms, which use a HOG descriptor, a SIFT descriptor.

6. System (1) according to any one of the preceding claims, **characterized**
**in that** said operating data comprise geolocation data relating to at least one geographical position of said handling means (10), and wherein said data acquisition means (111) comprise geolocation means (115) configured to acquire said geolocation data, and/or
**in that** said operating data comprise environmental data relating to respective atmospheric conditions with respect to said at least one geographical position of said moving means (10), and wherein said data acquisition means (111) comprise a plurality of sensors (116) to acquire said environmental data.

7. System (1) for monitoring a transport infrastructure (I) according to any one of the preceding claims, **characterized in that** said remote detecting unit (11) comprises storage means (114) for storing said operating data.

8. Method for monitoring a transport infrastructure (I), such as a road, railway tracks, on which a moving means (10) is mobile, by means of the system (1) according to any one of claims 1-7, wherein a remote detecting unit (11) is associated with said moving means (10) and wherein said method comprises the following steps:
- acquiring (200), through said data acquisition means (111) of said remote detecting unit (11), said operating data comprising said one or more data relating to motion parameters of said moving means (10);
- receiving (200'), from said remote detecting unit (11), through said transceiver means (131) of said central control unit (13), said operational data; **characterized by** the steps of:
- generating (203), by means of said storage means (132) of said central control unit (13), said model for the recognition of said failures (D) of said transport infrastructure (I) starting from said operating data;
- transmitting (210), by means of said transceiver means (131) of said central control unit (13), said recognition model and said one or more predetermined reference thresholds of the motion of said moving means (10) to said remote detecting unit (11);
- checking (212), by means of said remote detecting unit (11), if said one or more data relating to the motion parameters of said moving means (10) are greater than said respective one or more predetermined reference thresholds;
- transmitting (215), through said transceiver means (110) of said remote detecting unit (11), said one or more data relating to motion parameters of said movement means (10) to said central control unit (13);
- receiving (220) said data by means of said transceiver means (131) of said central control unit (13);
- processing (221), by means of said processing unit (130) of said central control unit (13), said data received by said transceiver means (131), so as to determine failures (D) of said transport infrastructure (I),
wherein said one or more data relating to motion parameters of said moving means (10) comprise vertical acceleration or deceleration data of said moving means (10) with respect to a vertical axis (A) perpendicular to said transport infrastructure (I), linear speed data of said moving means (10) with respect to a reference system, and angular velocity data of said moving means (10), with respect to said reference system,
wherein said data acquisition means (111) comprise an accelerometer (114), configured to detect said vertical acceleration or deceleration data, and said linear speed data, and a gyroscope (117), configured to detect said angular velocity data, and
wherein said one or more reference thresholds comprise a first vertical acceleration or deceleration reference threshold (A1), a second linear speed reference threshold (A2), and a third angular velocity reference threshold (A3).

9. Method according to the preceding claim, **characterized**
**in that**, after said verification step (212), in case of a positive result, it includes the step of comparing (213) said recognition model with a objects recognition model of Open Source type, such as a TensorFlow model, and acquiring, by means of said geolocation means (115), said geolocation data relating to at least one geographical position of said moving means (10), and
**in that** said transmission step (215) further provides for a transmission to said central control unit (13) of said geolocation data, and of the result of said comparison.

10. Method according to any one of claims 8-9, **characterized in that** said central control unit (13), in the processing step (221), generates a further model for recognizing said failures (D) of said transport infrastructure (I) starting from said received data.

11. Method according to any one of claims 8-10, **characterized in that** it comprises a further transmission step (201), wherein said central control unit (13) transmits vehicle data to said storage means (132), concerning the type of said moving means (10), and acquisition data, relating to the type of said acquisition means (111).

12. Method according to any one of claims 8-11, when said system (1) according to claim 5 is dependent on any one of claims 1-4, **characterized in that** it comprises the step of acquiring, by means of said camera (113) of said data acquisition means (111) of said detection units remote (11), said structure data relating to the geometric configuration of said transport infrastructure (I).

13. Method according to any one of claims 8-12, when said system (1) according to claim 7 is dependent on any one of claims 1-6, **characterized in that** it comprises the step of acquiring, by means of said plurality of sensors (116) of said data acquisition means (111) of said remote detecting unit (11), said environmental data, relative to respective atmospheric conditions with respect to said at least one geographical position of said moving means (10).

## Patentansprüche

1. System (1) zur Überwachung einer Verkehrsinfrastruktur (I), wie z.B.
eine Straße, Eisenbahnschienen, auf denen sich ein Fortbewegungsmittel (10) bewegen kann, wobei das System Folgendes umfasst:
eine Fernerkennungseinheit (11), die mit den genannten Fortbewegungsmitteln
(10) verbunden ist, Folgendes umfassend Eine Datenerfassungseinrichtung (111) zur Erfassung von Betriebsdaten,
enthaltend eine oder mehrere Daten, die sich auf die Bewegungsparameter der genannten
Fortbewegungsmittel (10) beziehen, und Sender-Empfangseinrichtung (110), das an ein Telematik-Kommunikationsnetz (12) angeschlossen werden kann; und eine zentrale Steuereinheit (13) mit
einer Verarbeitungseinheit (130) und Sender-Empfangseinrichtung (131), das an das Telematik-Kommunikationsnetz (12) angeschlossen werden kann, und Speichermittel (132), um die von der genannten zentralen Steuereinheit (13) empfangenen Daten zu speichern, **dadurch gekennzeichnet,**
**dass** die zentrale Steuereinheit (13) konfiguriert ist mindestens ein Modell, zur
Erkennung der Ausfälle (D) der Verkehrsinfrastruktur (I) zu erzeugen.
wobei die zentrale Steuereinheit (13) so konfiguriert ist,
**dass** sie über die Sende-/Empfangseinrichtung (131) und über das Telematik-Kommunikationsnetz (12) einen oder mehrere vorbestimmte Referenzschwellenwerte
der Bewegung des Fortbewegungsmittels (10) an die entfernte
Erfassungseinheit (11) und das Erkennungsmodell zu übertragen,
wobei die Fernerkennungseinheit (11) so konfiguriert ist, dass sie prüft, ob die einen oder mehreren Daten, die sich auf die Bewegungsparameter der Fortbewegungsmittel (10) beziehen, größer sind als die jeweilige(n) eine(n) oder mehrere vorbestimmte(n) Referenzschwelle(n), um so durch die zentrale Steuereinheit (13) Ausfälle (D) der Transportinfrastruktur (I) zu bestimmen,
wobei die einen oder mehreren Daten, die sich auf Bewegungsparameter des Fortbewegungsmittels (10) beziehen, vertikale Beschleunigungs- oder Verzögerungsdaten des Fortbewegungsmittels (10) in Bezug auf eine vertikale Achse (A) senkrecht zu der Transportinfrastruktur (I), lineare Geschwindigkeitsdaten des Fortbewegungsmittels (10) in Bezug auf ein Referenzsystem und Winkelgeschwindigkeitsdaten des Fortbewegungsmittels (10) wobei die Datenerfassungseinrichtung (111) einen Beschleunigungsmesser (114) umfasst, der so konfiguriert ist, dass er die vertikalen Beschleunigungs- oder Verzögerungsdaten und die linearen Geschwindigkeitsdaten erfasst, und ein Gyroskop (117), das so konfiguriert ist, dass es die Winkelgeschwindigkeitsdaten erfasst, wobei der eine oder die mehreren Referenzschwellenwerte einen ersten vertikalen Beschleunigungs- oder Verzögerungsreferenzschwellenwert (A1), einen zweiten linearen Geschwindigkeitsreferenzschwellenwert (A2) und einen dritten Winkelgeschwindigkeitsreferenzschwellenwert (A3) umfassen.

2. System (1) nach dem vorhergehenden Anspruch, **dadurch gekennzeichnet, dass** das Bezugssystem ein kartesisches Bezugssystem xyz ist, wobei die linearen Geschwindigkeitsdaten des Fortbewegungsmittels (10) von dem Beschleunigungsmesser (114) in Bezug auf die xy-Ebene des kartesischen Bezugssystems xyz erfasst werden, wobei die xy-Ebene senkrecht zur genannten
Achse (A) steht, und
wobei die Winkelgeschwindigkeitsdaten des Fortbewegungsmittels (10) durch das Gyroskop (117) um die Achsen x, y, z des kartesischen Bezugssystems xyz erfasst werden.

3. System (1) nach einem der vorhergehenden Ansprüche, **dadurch gekennzeichnet, dass** die Bestimmung der Ausfälle (D) der Verkehrsinfrastruktur (I) durch die Fernerkennungseinheit (11) durch Vergleich eines Erkennungsmodells der Ausfälle (D), das durch die Betriebsdaten definiert ist, mit einer Objektmodellerkennung des Open-Source-Typs als TensorFlow-Modell erfasst wird.

4. System (1) nach einem der vorhergehenden Ansprüche, **dadurch gekennzeichnet, dass** das System (1) deaktiviert wird, wenn die lineare Geschwindigkeit der Fortbewegungsmittel (10) auf der Transportinfrastruktur (I) unter einem weiteren vorbestimmten Geschwindigkeitsschwellenwert liegt.

5. System (1) nach einem der vorhergehenden Ansprüche, **Dadurch gekennzeichnet,**
**dass** die Betriebsdaten Strukturdaten umfassen, die sich auf die geometrische Konfiguration der Verkehrsinfrastruktur (I) beziehen, wobei die Datenerfassungsmittel (111) mindestens eine Videokamera (113) zum Erfassen der Strukturdaten in Echtzeit umfassen, und/oder dass die Strukturdaten, die sich auf die geometrische Konfiguration der Verkehrsinfrastruktur (I) beziehen, durch die Verarbeitungseinheit (130) der zentralen Steuereinheit (13) durch Objekterkennungsalgorithmen, die einen HOG-Deskriptor, einen SIFT-Deskriptor verwenden, verarbeitet oder nachverarbeitet werden.

6. System (1) nach einem der vorhergehenden Ansprüche, **dadurch gekennzeichnet, dass** die Betriebsdaten Geolokalisierungsdaten umfassen, die sich auf mindestens eine geografische Position des Fortbewegungsmittels (10) beziehen, und wobei die Datenerfassungseinrichtung (111) eine Geolokalisierungseinrichtung (115) umfasst, die so konfiguriert ist, dass sie die Geolokalisierungsdaten erfasst, und/oder dadurch, dass die Betriebsdaten Umgebungsdaten umfassen, die sich auf die jeweiligen atmosphärischen Bedingungen in Bezug auf die mindestens eine geografische Position des Fortbewegungsmittels (10) beziehen, und wobei die Datenerfassungseinrichtung (111) eine Vielzahl von Sensoren (116) umfasst, um die Umgebungsdaten zu erfassen.

7. System (1) zur Überwachung einer Verkehrsinfrastruktur (I) nach einem der vorhergehenden Ansprüche, **dadurch gekennzeichnet, dass** die Fernerkennungseinheit (11) Speichermittel (114) zur Speicherung der Betriebsdaten umfasst.

8. Verfahren zum Überwachen einer Verkehrsinfrastruktur (I), wie z.B. einer Straße, Eisenbahnschienen, auf der ein Fortbewegungsmittel (10) beweglich ist, mittels des Systems (1) nach einem der Ansprüche 1-7, wobei eine Fernerkennungseinheit (11) mit dem Fortbewegungsmittel (10) verbunden ist und wobei das Verfahren die folgenden Schritte umfasst:
- Erfassen (200) der Betriebsdaten, die die einen oder mehreren Daten umfassen, die sich auf die Bewegungsparameter der Fortbewegungsmittel (10) beziehen, durch die Datenerfassungsmittel (111) der Fernerkennungseinheit (11);
- Empfangen (200') der Betriebsdaten von der Fernerkennungseinheit (11) über die Sende-/Empfangseinrichtung (131) der zentralen Steuereinheit (13);
**gekennzeichnet durch** die folgenden Schritte:
- Erzeugen (203) des Modells für die Erkennung der Ausfälle (D) der Verkehrsinfrastruktur (I) ausgehend von den Betriebsdaten mittels der Speichermittel (132) der zentralen Steuereinheit (13);
- Übertragen (210) des Erkennungsmodells und des einen oder der mehreren vorbestimmten Referenzschwellenwerte der Bewegung des Fortbewegungsmittels (10) an die Fernerkennungseinheit (11) mittels der Sende-/Empfangseinrichtung (131) der zentralen Steuereinheit (13);
- Prüfen (212) mittels der genannten Fernerkennungseinheit (11), ob die einen oder mehreren Daten, die sich auf die genannten Bewegungsparameter des genannten Fortbewegungsmittels (10) beziehen, größer sind als die jeweiligen einen oder mehreren vorbestimmten Referenzschwellenwerte;
- Übertragen (215) der einen oder mehreren Daten, die sich auf die genannten Bewegungsparameter der genannten Bewegungseinrichtung (10) beziehen, über die genannte Sende-/Empfangseinrichtung (110) der genannten Fernerkennungseinheit (11) an die genannte zentrale Steuereinheit (13);
- Empfang (220) der genannen Daten mittels der genannten Sende-/Empfangseinrichtung (131) der genannten zentralen Steuereinheit (13);
- Verarbeitung (221) der von der genannten Sende-Empfangs-Einrichtung (131) empfangenen Daten **durch** die genannte Verarbeitungseinheit (130) der genannten zentralen Steuereinheit (13), um Ausfälle (D) der genannten Verkehrsinfrastruktur (I) zu bestimmen,
wobei die einen oder mehreren Daten, die sich auf Bewegungsparameter des genannten Fortbewegungsmittels (10) beziehen, vertikale Beschleunigungs- oder Verzögerungsdaten des genannten Fortbewegungsmittels (10) in Bezug auf eine vertikale Achse (A) senkrecht zur genannten Transportinfrastruktur (I), lineare Geschwindigkeitsdaten des genannten Fortbewegungsmittels (10) in Bezug auf ein Referenzsystem und Winkelgeschwindigkeitsdaten des genannten Fortbewegungsmittels (10) in Bezug auf das genannte Referenzsystem umfassen,
wobei die genannte Datenerfassungseinrichtung (111) einen Beschleunigungsmesser (114) umfasst, der so konfiguriert ist, dass er die genannten vertikalen Beschleunigungs- oder Verzögerungsdaten und die genannten linearen Geschwindigkeitsdaten erfasst, sowie ein Gyroskop (117), das
so konfiguriert ist, dass sie die genannten Winkelgeschwindigkeitsdaten erfasst, und wobei der eine oder die mehreren Referenzschwellenwerte einen ersten vertikalen Beschleunigungs- oder Verzögerungsreferenzschwellenwert (A1), einen zweiten linearen Geschwindigkeitsreferenzschwellenwert (A2) und einen dritten Winkelgeschwindigkeitsreferenzschwellenwert (A3) umfassen

9. Verfahren nach dem vorhergehenden Anspruch, **dadurch gekennzeichnet**
**dass** er nach dem Verifizierungsschritt (212) im Falle eines positiven Ergebnisses den Schritt des Vergleichens (213) des genannten Erkennungsmodells mit einem Objekterkennungsmodell vom Open-Source-Typ, wie etwa einem TensorFlow-Modell, und des Erfassens der genannten Geolokalisierungsdaten, die sich auf mindestens eine geografische Position des genannten Fortbewegungsmittels (10) beziehen, mit Hilfe der genannten Geolokalisierungsmittel (115) umfasst,
und
dadurch, dass der Übertragungsschritt (215) des Weiteren eine Übertragung der Geolokalisierungsdaten und des Ergebnisses des Vergleichs an die genannte zentrale Steuereinheit (13) vorsieht.

10. Verfahren nach einem der Ansprüche 8 bis 9, **dadurch gekennzeichnet, dass** die genannte zentrale Steuereinheit (13) in dem Verarbeitungsschritt (221) ein weiteres Modell zur Erkennung der genannten Störungen (D) der genannten Verkehrsinfrastruktur (I) ausgehend von den genannten empfangenen Daten erzeugt.

11. Verfahren nach einem der Ansprüche 8-10, **dadurch gekennzeichnet, dass** es einen weiteren Übertragungsschritt (201) umfasst, bei dem die genannte zentrale Steuereinheit (13) Fahrzeugdaten, die den Typ der genannten Fortbewegungsmittel (10) betreffen, und Erfassungsdaten, die sich auf den Typ der genannten Datenerfassungseinrichtung (111) beziehen, an die genannten Speichermittel (132) überträgt.

12. Verfahren nach einem der Ansprüche 8-11, wenn das System (1) nach Anspruch 5 von einem der Ansprüche 1-4 abhängt, **dadurch gekennzeichnet, dass** es den Schritt des Erfassens der Strukturdaten, die sich auf die geometrische Konfiguration der Verkehrsinfrastruktur (I) beziehen, mittels der genannten Kamera (113) der genannten Datenerfassungseinrichtung (111) der genannten entfernten Fernerkennungseinheit (11) umfasst.

13. Verfahren nach einem der Ansprüche 8 bis 12, wenn das System (1) nach Anspruch 7 von einem der Ansprüche 1 bis 6 abhängt, **dadurch gekennzeichnet, dass** es den Schritt des Erfassens der Umgebungsdaten mit Hilfe der mehreren Sensoren (116) der genannten Datenerfassungseinrichtung (111) der genannten Fernerkennungseinheit (11) in Bezug auf die jeweiligen atmosphärischen Bedingungen in Bezug auf die genannte mindestens eine geographische Position der genannten Fortbewegungsmittel (10) umfasst.

## Revendications

1. Système (1) pour surveiller une infrastructure de transport (I), telle qu'une route, des voies ferrées, sur laquelle des moyens de déplacement (10) peuvent se déplacer, comprenant :
une unité de détection à distance (11), associée auxdits moyens de déplacement (10), comprenant des moyens d'acquisition de données (111), pour acquérir des données opérationnelles,
comprenant une ou plusieurs données relatives aux paramètres de mouvement desdits moyens de déplacement (10), et
des moyens émetteurs-récepteurs (110), pouvant être connectés à un réseau de communication télématique (12) ; et
une unité centrale de commande (13) comprenant
une unité de traitement (130) et
des moyens émetteurs-récepteurs (131), pouvant être connectés audit réseau de communication télématique (12), et
des moyens de stockage (132), pour stocker lesdites données reçues par ladite unité de commande centrale (13), **caractérisé en ce que**
l'unité de commande centrale (13) est configurée pour générer au moins un modèle pour reconnaître lesdites défaillances (D) de ladite infrastructure de transport (I)
dans lequel ladite unité de commande centrale (13) est configurée pour transmettre,
par l'intermédiaire dudit moyen émetteur-récepteur (131) et par l'intermédiaire dudit réseau de communication télématique (12), un ou plusieurs seuils de référence prédéterminés du mouvement desdits moyens de déplacement (10) à ladite unité de détection à distance (11) et audit modèle de reconnaissance,
dans lequel ladite unité de détection à distance (11) est configurée pour vérifier si lesdites une ou plusieurs données relatives aux paramètres de mouvement desdits moyens de déplacement (10) sont supérieures auxdits un ou plusieurs seuils de référence prédéterminés respectifs, de façon à déterminer par ladite unité de commande centrale (13) des défaillances (D) de ladite infrastructure de transport (I),
dans lequel lesdites une ou plusieurs données relatives aux paramètres de mouvement desdits moyens de déplacement (10) comprennent des données d'accélération ou de décélération verticale desdits moyens de déplacement (10) par rapport à un axe vertical (A) perpendiculaire à ladite infrastructure de transport (I), des données de vitesse linéaire desdits moyens de déplacement (10) par rapport à un système de référence, et des données de vitesse angulaire desdits moyens de déplacement (10), par rapport audit système de référence,
dans lequel lesdits moyens d'acquisition de données (111) comprennent un accéléromètre (114), configuré pour détecter lesdites données d'accélération ou de décélération verticale, et lesdites données de vitesse linéaire, et un gyroscope (117), configuré pour détecter lesdites données de vitesse angulaire, et
dans lequel lesdits un ou plusieurs seuils de référence comprennent un premier seuil de référence d'accélération ou de décélération verticale (A1), un deuxième seuil de référence de vitesse linéaire (A2), et un troisième seuil de référence de vitesse angulaire (A3) .

2. Système (1) selon la revendication précédente, **caractérisé en ce que** ledit système de référence est un système de référence cartésien xyz,
dans lequel les données de vitesse linéaire desdits moyens de déplacement (10) sont détectées par ledit accéléromètre (114) par rapport au plan xy dudit système de référence cartésien xyz, ledit plan xy étant perpendiculaire audit axe (A), et
dans lequel lesdites données de vitesse angulaire desdits moyens de déplacement (10) sont détectées par ledit gyroscope (117) autour des axes x, y, z dudit système de référence cartésien xyz.

3. Système (1) selon l'une quelconque des revendications précédentes, **caractérisé en ce que** la détermination desdites défaillances (D) de ladite infrastructure de transport (I) est détectée par ladite unité de détection à distance (11) en comparant un modèle de reconnaissance desdites défaillances (D) défini par lesdites données opérationnelles avec un modèle de reconnaissance d'objets du type Open Source comme un modèle TensorFlow.

4. Système (1) selon l'une quelconque des revendications précédentes, **caractérisé en ce que** ledit système (1) est désactivé lorsque ladite vitesse linéaire desdits moyens de déplcament (10) sur ladite infrastructure de transport (I) est inférieure à un autre seuil de vitesse prédéterminé.

5. Système (1) selon l'une quelconque des revendications précédentes, **caractérisé**
**en ce que** lesdites données opérationnelles comprennent des données de structure relatives à la configuration géométrique de ladite infrastructure de transport (I), dans lequel lesdits moyens d'acquisition de données (111) comprennent au moins une caméra vidéo (113) pour acquérir lesdites données de structure en temps réel, et/ou
**en ce que** lesdites données de structure relatives à la configuration géométrique de ladite infrastructure de transport (I) sont traitées ou post-traitées par ladite unité de traitement (130) de ladite unité de commande centrale (13) par le biais d'algorithmes de reconnaissance d'objets, qui utilisent un descripteur HOG, un descripteur SIFT.

6. Système (1) selon l'une quelconque des revendications précédentes, **caractérisé**
**en ce que** lesdites données opérationnelles comprennent des données de géolocalisation relatives à au moins une position géographique desdits moyens de manutention (10), et dans lequel lesdits moyens d'acquisition de données (111) comprennent des moyens de géolocalisation (115) configurés pour acquérir lesdites données de géolocalisation, et/ou
**en ce que** lesdites données opérationnelles comprennent des données environnementales relatives à des conditions atmosphériques respectives par rapport à ladite au moins une position géographique desdits moyens de déplacement (10), et dans lequel lesdits moyens d'acquisition de données (111) comprennent une pluralité de capteurs (116) pour acquérir lesdites données environnementales.

7. Système (1) de surveillance d'une infrastructure de transport (I) selon l'une quelconque des revendications précédentes, **caractérisé en ce que** ladite unité de détection à distance (11) comprend des moyens de stockage (114) pour stocker lesdites données opérationnelles.

8. Procédé de surveillance d'une infrastructure de transport (I), telle qu'une route, des voies ferrées, sur laquelle un moyen de déplacement (10) est mobile, au moyen du système (1) selon l'une quelconque des revendications 1 à 7, dans lequel une unité de détection à distance (11) est associée auxdits moyens de déplacement (10) et dans lequel ledit procédé comprend les étapes suivantes :
- acquérir (200), par l'intermédiaire dudit moyen d'acquisition de données (111) de ladite unité de détection à distance (11), lesdites données opérationnelles comprenant lesdites une ou plusieurs données relatives aux paramètres de mouvement desdits moyens de déplacement (10) ;
- recevoir (200'), à partir de ladite unité de détection à distance (11), par l'intermédiaire dudit moyen d'émetteur-récepteur (131) de ladite unité de commande centrale (13), lesdites données opérationnelles ;
**caractérisé par** les étapes consistant à :
- générer (203), au moyen desdits moyens de stockage (132) de ladite unité de commande centrale (13), ledit modèle pour la reconnaissance desdites défaillances (D) de ladite infrastructure de transport (I) à partir desdites données opérationnelles ;
- transmettre (210), au moyen dudit moyen émetteur-récepteur (131) de ladite unité de commande centrale (13), ledit modèle de reconnaissance et lesdits un ou plusieurs seuils de référence prédéterminés du mouvement desdits moyens de déplacement (10) à ladite unité de détection à distance (11) ;
- vérifier (212), au moyen de ladite unité de détection à distance (11), si lesdites une ou plusieurs données relatives aux paramètres de mouvement desdits moyens de déplacement (10) sont supérieures auxdits un ou plusieurs seuils de référence prédéterminés respectifs ;
- transmettre (215), par l'intermédiaire dudit moyen émetteur-récepteur (110) de ladite unité de détection à distance (11), lesdites une ou plusieurs données relatives aux paramètres de mouvement desdits moyens de déplacement (10) à ladite unité de commande centrale (13) ;
- recevoir (220) lesdites données au moyen dudit moyen émetteur-récepteur (131) de ladite unité de commande centrale (13) ;
- traiter (221), au moyen de ladite unité de traitement (130) de ladite unité de commande centrale (13), lesdites données reçues par ledit moyen d'émetteur-récepteur (131), de façon à déterminer des défaillances (D) de ladite infrastructure de transport (I),
dans lequel lesdites une ou plusieurs données relatives aux paramètres de mouvement desdits moyens de déplacement (10) comprennent des données d'accélération ou de décélération verticale desdits moyens de déplacement (10) par rapport à un axe vertical (A) perpendiculaire à ladite infrastructure de transport (I), des données de vitesse linéaire desdits moyens de déplacement (10) par rapport à un système de référence, et des données de vitesse angulaire desdits moyens de déplacement (10), par rapport audit système de référence,
dans lequel lesdits moyens d'acquisition de données (111) comprennent un accéléromètre (114), configuré pour détecter lesdites données d'accélération ou de décélération verticale, et lesdites données de vitesse linéaire, et un gyroscope (117), configuré pour détecter lesdites données de vitesse angulaire, et
dans lequel lesdits un ou plusieurs seuils de référence comprennent un premier seuil de référence d'accélération ou de décélération verticale (A1), un deuxième seuil de référence de vitesse linéaire (A2), et un troisième seuil de référence de vitesse angulaire (A3) .

9. Procédé selon la revendication précédente, **caractérisé**
**en ce que**, après ladite étape de vérification (212), en cas de résultat positif, il comporte l'étape de comparaison (213) dudit modèle de reconnaissance avec un modèle de reconnaissance d'objets de type Open Source, tel qu'un modèle TensorFlow, et d'acquisition, par l'intermédiaire desdits moyens de géolocalisation (115), desdites données de géolocalisation relatives à au moins une position géographique desdits moyens de déplacement (10),
et
**en ce que** ladite étape de transmission (215) prévoit en outre une transmission à ladite unité centrale de commande (13) desdites données de géolocalisation, et du résultat de ladite comparaison.

10. Procédé selon l'une quelconque des revendications 8-9, **caractérisé en ce que** ladite unité centrale de commande (13), dans l'étape de traitement (221), génère un autre modèle pour reconnaître lesdites défaillances (D) de ladite infrastructure de transport (I) à partir desdites données reçues.

11. Procédé selon l'une quelconque des revendications 8 à 10, **caractérisé en ce qu'**il comprend une étape supplémentaire de transmission (201), dans laquelle ladite unité centrale de commande (13) transmet auxdits moyens de stockage (132) des données de véhicule, concernant le type desdits moyens de déplacement (10), et des données d'acquisition, concernant le type desdits moyens d'acquisition (111).

12. Procédé selon l'une quelconque des revendications 8-11, lorsque ledit système (1) selon la revendication 5 est dépendant de l'une quelconque des revendications 1-4, **caractérisé en ce qu'**il comprend l'étape d'acquisition, au moyen de ladite caméra (113) desdits moyens d'acquisition de données (111) desdites unités de détection à distance (11), desdites données de structure relatives à la configuration géométrique de ladite infrastructure de transport (I).

13. Procédé selon l'une quelconque des revendications 8 à 12, lorsque ledit système (1) selon la revendication 7 est dépendant de l'une quelconque des revendications 1 à 6, **caractérisé en ce qu'**il comprend l'étape d'acquisition, au moyen de ladite pluralité de capteurs (116) desdits moyens d'acquisition de données (111) de ladite unité de détection à distance (11), desdites données environnementales, relatives à des conditions atmosphériques respectives par rapport à ladite au moins une position géographique desdits moyens de déplacement (10).
